# EUROPEAN PATENT APPLICATION

(11) **EP 4 660 382 A1**
(43) Date of publication of application: **10.12.2025**
(21) Application number: 23930944.6
(22) Date of filing: 21.12.2023
(51) Int. Cl.: E02F 9/20, B60L 1/00, E02F 9/00

(54) **CONSTRUCTION MACHINE**

(30) Priority: 30.03.2023 JP 2023056724
(71) Applicant: Hitachi Construction Machinery Tierra Co., Ltd., Shiga 528-0061, (JP)
(72) Inventor: MORI, Kazushige, Koka-shi, Shiga 528-0061 (JP); KAWAGUCHI, Hiroshi, Koka-shi, Shiga 528-0061 (JP); ISHII, Takeshi, Koka-shi, Shiga 528-0061 (JP); TANIGUCHI, Tsukasa, Koka-shi, Shiga 528-0061 (JP); INOUE, Ryoya, Koka-shi, Shiga 528-0061 (JP)
(74) Representative: Manitz Finsterwald Patent- und Rechtsanwaltspartnerschaft mbB
(86) International application number: PCT/JP2023/046017
(87) International publication number: WO 2024/202325

(57) **Abstract**

A construction machine is provided that is capable of charging an electricity storage device with regenerative electric power from an electrically driven motor and restraining the electricity storage device from being deteriorated. An excavator includes an electrically driven motor, a controller for outputting a rotational speed command, an inverter for controlling a rotational speed of the electrically driven motor in response to the rotational speed command from the controller, and an electricity storage device for outputting drive electric power to the inverter upon acceleration of the electrically driven motor and being supplied with regenerative electric power input from the inverter upon deceleration of the electrically driven motor. The controller outputs the rotational speed command to the inverter such that a reduction rate of the rotational speed of the electrically driven motor is equal to or lower than a predetermined limit value, upon deceleration of the electrically driven motor.

## Description

### Technical Field

The present invention relates to a construction machine such as an excavator, for example.

### Background Art

Patent Document 1 discloses an excavator as one of construction machines. The excavator disclosed in Patent Document 1 includes an electricity storage device (e.g., one configured with a lithium ion battery), an electrically driven motor driven by the electric power from the electricity storage device and a pilot pump, a hydraulic pump driven by the electrically driven motor, hydraulic actuators, a control valve for controlling the flow of a hydraulic fluid from the hydraulic pump to the hydraulic actuators, and an operation device for operating the control valve. The operation device generates pilot pressures by using the pressure delivered from the pilot pump and outputs the generated pilot pressures to operate the control valve.

The excavator disclosed in Patent Document 1 includes an on/off valve disposed between the pilot pump and the operation device and a cut-off lever for shifting the on/off valve between an interrupting state and a communicating state by being operated pivotally in upward and downward directions. When the cut-off lever is operated upwardly to shift the on/off valve into the interrupting position, the operation device is unable to generate the pilot pressures to prevent the hydraulic actuators from being driven. On the other hand, when the cut-off lever is operated downwardly to shift the on/off valve into the communicating state, the operation device is able to generate the pilot pressures to allow the hydraulic actuators to be driven.

The excavator disclosed in Patent Document 1 includes a controller for controlling an inverter to change the rotational speed of the electrically driven motor in response to the operation of the cut-off lever (stated otherwise, the shifting of the on/off valve). When the cut-off lever is operated downwardly (stated otherwise, when the on/off valve is shifted into the communicating position), the controller outputs a rotational speed command to the inverter such that the rotational speed of the electrically driven motor is to be a target value. On the other hand, when the cut-off lever is operated upwardly (stated otherwise, when the on/off valve is shifted into the interrupting position), the controller outputs a rotational speed command to the inverter to bring the rotational speed of the electrically driven motor to be zero (stated otherwise, to stop the electrically driven motor).

### Prior Art Document

### Patent Document

Patent Document 1: WO2019/208370

### Summary of the Invention

### Problems to be Solved by the Invention

If the electricity storage device is charged with electric power regenerated when the electrically driven motor of the excavator disclosed in Patent Document 1 is stopped or decelerated, then it is possible to save energy. However, an allowable value (upper limit value) for the charging current of the electricity storage device is determined based on the voltage and temperature of the electricity storage device. If a charging current in excess of the above described allowable value is generated at the time of charging the electricity storage device with the regenerative electric power from the electrically driven motor, then the deterioration of the electricity storage device is accelerated.

The present invention provides a construction machine having an electricity storage device that can be charged with regenerative electric power from an electrically driven motor and that can be restrained from being deteriorated.

### Means for Solving the Problems

In order to achieve the above object, there is provided, according to the present invention, a construction machine including: an electrically driven motor; a controller for outputting a rotational speed command; an inverter for controlling a rotational speed of the electrically driven motor in response to the rotational speed command from the controller; and an electricity storage device for outputting drive electric power to the inverter upon acceleration of the electrically driven motor, and being supplied with regenerative electric power input from the inverter upon deceleration of the electrically driven motor, in which the controller outputs the rotational speed command to the inverter such that a reduction rate of the rotational speed of the electrically driven motor is equal to or lower than a predetermined limit value, upon deceleration of the electrically driven motor.

### Advantages of the invention

According to the present invention, the electricity storage device can be charged with regenerative electric power from the electrically driven motor and can be restrained from being deteriorated.

[Fig. 1] Fig. 1 is a side elevational view illustrating the structure of an excavator according to an embodiment of the present invention.
[Fig. 2] Fig. 2 is a diagram illustrating the configuration of a drive system of the excavator according to the embodiment of the present invention.
[Fig. 3] Fig. 3 is a diagram illustrating the configuration of a control system of the excavator according to the embodiment of the present invention.
[Fig. 4] Fig. 4 is a diagram illustrating the functional configuration of a controller according to the embodiment of the present invention, together with related equipment.
[Fig. 5] Fig. 5 is a flowchart illustrating a processing sequence of the controller according to the embodiment of the present invention.
[Fig. 6] Fig. 6 is a timing chart illustrating changes in the rotational speeds of electrically driven motors and changes in currents according to the embodiment of the present invention and a comparative example.

### Modes for Carrying Out the Invention

An embodiment of the present invention will be described below with reference to the drawings.

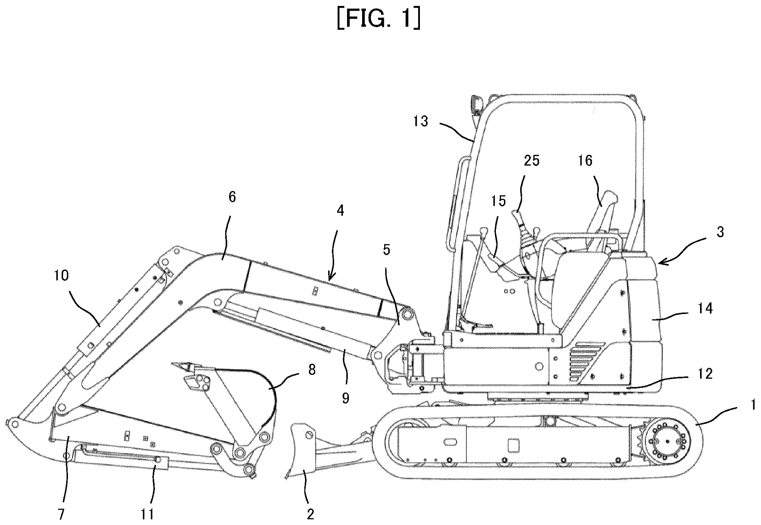

Fig. 1 is a side elevational view illustrating the structure of an excavator according to the present embodiment.

The excavator according to the present embodiment includes a track structure 1, a blade 2 that is mounted movably in upward and downward directions on a front side (left side in Fig. 1) of the track structure 1, a swing structure 3 that is mounted swingably in leftward and rightward directions on an upper side of the track structure 1, and a work implement 4 coupled to a front side (left side in Fig. 1) of the swing structure 3. The track structure 1 travels upon rotation of left and right track motors (not depicted). The blade 2 is moved by a blade cylinder (not depicted) as it is extended and contracted. The swing structure 3 is swung by a swing motor (not depicted) as it rotates.

The work implement 4 includes a post 5 coupled pivotally in leftward and rightward directions to the front side of the swing structure 3, a boom 6 coupled pivotally in upward and downward directions to the post 5, an arm 7 coupled pivotally in upward and downward directions to a distal end of the boom 6, and a bucket 8 coupled pivotally in upward and downward directions to a distal end of the arm 7. The post 5 is pivoted by a post cylinder (not depicted) as it is extended and contracted. The boom 6 is pivoted by a boom cylinder 9 as it is extended and contracted. The arm 7 is pivoted by an arm cylinder 10 as it is extended and contracted. The bucket 8 is pivoted by a bucket cylinder 11 as it is extended and contracted.

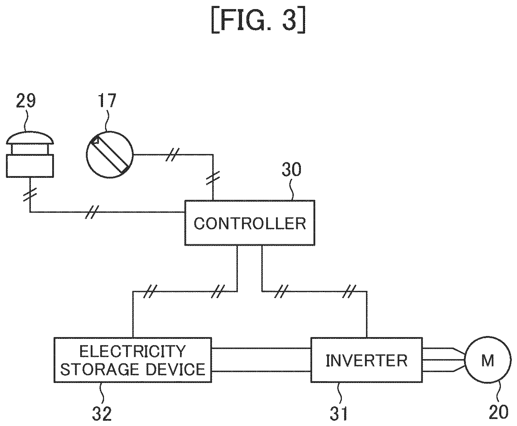

The swing structure 3 includes a swing frame 12 as a basic structure body, a canopy-type cabin 13 mounted on an upper side of the swing frame 12, and a counterweight 14 disposed on a rear side (right side in Fig. 1) of the swing frame 12. A lock lever 15 that the operator can operate selectively into a raised position (a position for allowing the operator to get on and off) and a lowered position (a position for preventing the operator from getting on and off) is disposed in a doorway of the cabin 13. The cabin 13 houses therein an operator's seat 16 on which the operator can be seated, a plurality of operation devices (to be described in detail later) that can be operated by the operator, and a rotational speed setting device 17 (see Fig. 3 to be described later).

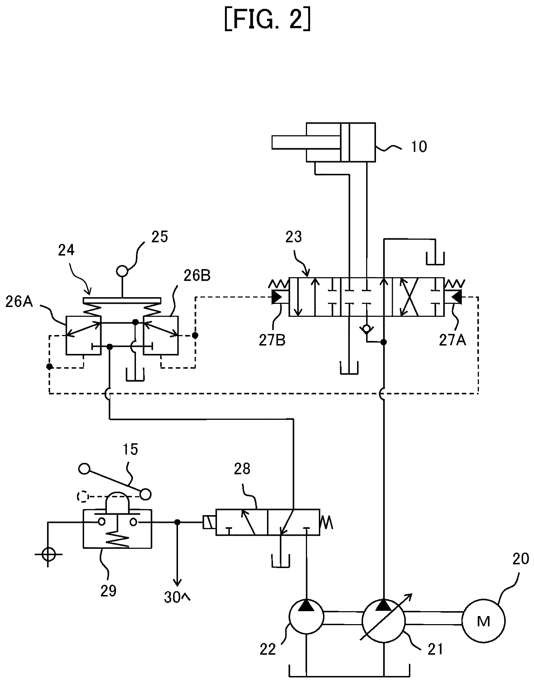

The excavator according to the present embodiment includes a drive system for driving a plurality of hydraulic actuators (specifically, the left and right track motors, the blade cylinder, the swing motor, the post cylinder, the boom cylinder 9, the arm cylinder 10, and the bucket cylinder 11 that have been described above) according to operation on the operation devices. Fig. 2 is a diagram illustrating the configuration relating to the arm cylinder 10 in the configuration of the drive system of the excavator according to the present embodiment.

The drive system according to the present embodiment includes an electrically driven motor 20, a hydraulic pump 21 and a pilot pump 22 that are driven by the electrically driven motor 20, a control valve 23 for controlling the flow (specifically, direction and flow rate) of a hydraulic fluid from the hydraulic pump 21 to the arm cylinder 10, and an operation device 24 for operating the control valve 23.

The operation device 24 includes an operation lever 25 that can be operated by the operator, a pilot valve 26A for reducing the delivered pressure from the pilot valve 22 to generate a pilot pressure on the basis of an operation amount toward one side of the operation lever 25, and a pilot valve 26B for reducing the delivered pressure from the pilot pump 22 to generate a pilot pressure on the basis of an operation amount toward the other side of the operation lever 25.

When the operator operates the operation lever 25 toward the one side thereof, the pilot pressure generated by the pilot valve 26A on the basis of the operation amount is output to a pressure receiving portion 27A of the control valve 23, and the control valve 23 is shifted to a shifted position which is a right side in the figure. Thus, the hydraulic fluid delivered from the hydraulic pump 21 is supplied to a rod side of the arm cylinder 10, and the arm cylinder 10 is driven (contracted).

When the operator operates the operation lever 25 toward the other side thereof, the pilot pressure generated by the pilot valve 26B on the basis of the operation amount is output to a pressure receiving portion 27B of the control valve 23, and the control valve 23 is shifted to a shifted position which is a left side in the figure. Thus, the hydraulic fluid delivered from the hydraulic pump 21 is supplied to a bottom side of the arm cylinder 10, and the arm cylinder 10 is driven (extended).

The configuration relating to the other hydraulic actuators (i.e., the track motors, the post cylinder, the swing motor, the boom cylinder 9, and the bucket cylinder 11) is essentially the same as the configuration relating to the arm cylinder 10. Specifically, a control valve is shifted by a pilot pressure from a corresponding operation device, and a hydraulic fluid delivered from the hydraulic pump is supplied to a hydraulic actuator to drive the hydraulic actuator.

The drive system according to the present embodiment includes a lock valve 28 provided between all the operation devices and the pilot pump 22 as a lock device that is shifted to a locked state that prevents the hydraulic actuators from being driven and to an unlocked state that allows the hydraulic actuators to be driven.

The lock valve 28 is shifted in response to operation on the lock lever 15 described above. Specifically, a lock switch 29 is provided on the lock lever 15. When the lock lever 15 is operated to a locked position (raised position), the lock switch 29 is opened. Thus, since a solenoid portion of the lock valve 28 is not energized, the lock valve 28 is in an interrupting position which is the right side in Fig. 2, preventing the delivered pressure of the pilot pump 22 from being introduced into all the operation devices. Therefore, all the operation devices are unable to generate a pilot pressure, preventing all the hydraulic actuators from being driven (locked state).

On the other hand, when the lock lever 15 is operated to an unlocked position (lowered position), the lock switch 29 is in a closed state. Thus, the solenoid portion of the lock valve 28 is energized, and the lock valve 28 is shifted to a communicating position which is the left side in Fig. 2, so that the delivered pressure of the pilot pump 22 is introduced into all the operation devices. Therefore, all the operation devices are able to generate a pilot pressure, allowing all the hydraulic actuators to be driven (unlocked state). Note that, the lock switch 29 is equivalent to a sensor for sensing whether the lock device is shifted to the locked state or to the unlocked state.

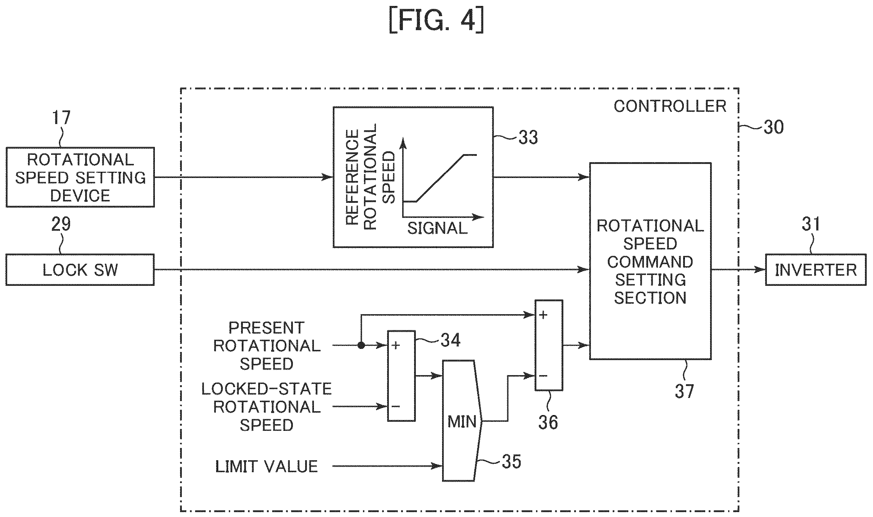

The excavator according to the present embodiment includes a control system that can perform a drive control and regenerative control on the electrically driven motor 20. Fig. 3 is a diagram illustrating the configuration of the control system of the excavator according to the present embodiment. Fig. 4 is a block diagram illustrating the functional configuration of a controller according to the present embodiment, together with related equipment.

The control system according to the present embodiment includes a controller 30 for being supplied with signals input from the rotational speed setting device 17 and the lock switch 29, setting a rotational speed command on the basis of the signals, and outputting the set rotational speed command, an inverter 31 for controlling the rotational speed of the electrically driven motor 20 in response to the rotational speed command from the controller 30, and an electricity storage device 32 for outputting drive electric power to the inverter 31 upon acceleration of the electrically driven motor 20 and being supplied with regenerative electric power input from the inverter 31 upon deceleration of the electrically driven motor 20. The electricity storage device 32 is configured with a lithium ion battery, for example.

The rotational speed setting device 17 has, for example, a dial that can be operated by the operator and a potentiometer for outputting a signal commensurate with a position to which the dial has been operated by the operator, in order to set a reference rotational speed for the electrically driven motor 20 within a predetermined range (e.g., 2400 to 1200 rpm).

The controller 30 has a processor for performing processing in accordance with programs and a memory for storing the programs and data. According to the most important feature of the present embodiment, the controller 30 has a function to output a rotational speed command to the inverter 31 such that a reduction rate of the rotational speed of the electrically driven motor 20 is equal to or lower than a predetermined limit value, upon deceleration of the electrically driven motor 20.

The controller 30 has, as functional configurations, a reference rotational speed computing section 33 for computing a reference rotational speed for the electrically driven motor 20 based on a signal from the rotational speed setting device 17, a difference computing section 34 for computing the difference between the present rotational speed of the electrically driven motor 20 and a predetermined locked-state rotational speed, a selecting section 35 for selecting a smaller one of the difference computed by the difference computing section 34 and the predetermined limit value, an interpolated rotational speed computing section 36 for computing an interpolated rotational speed by subtracting the difference selected by the selecting section 35 from the present rotational speed of the electrically driven motor 20, and a rotational speed command setting section 37 for setting a rotational speed command based on the signal from the lock switch 29 and the computed result from the reference rotational speed computing section 33 or the interpolated rotational speed computing section 36 and outputting the set rotational speed command to the inverter.

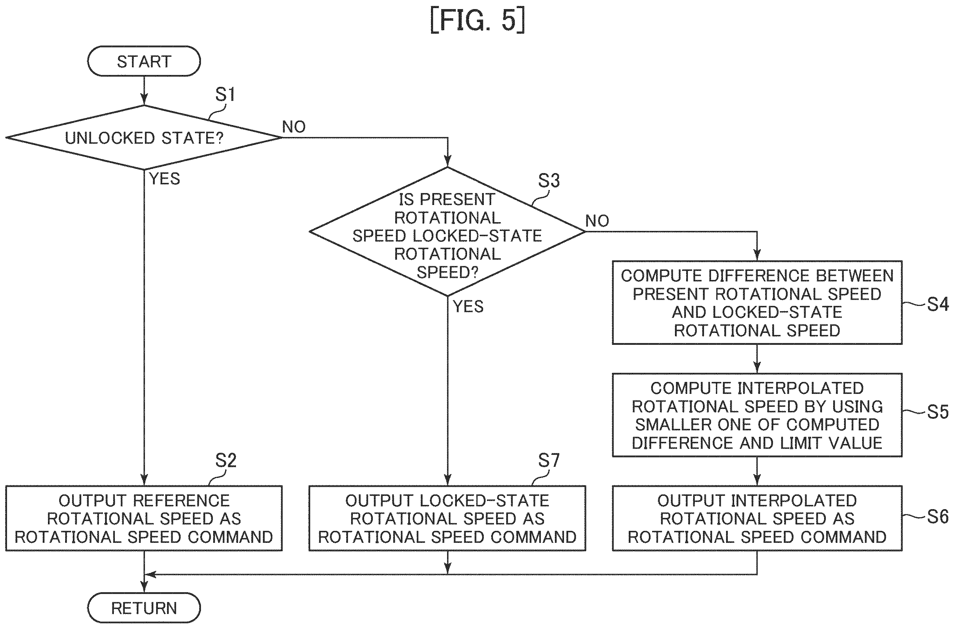

Next, the processing sequence of the controller 30 according to the present embodiment will be described below with reference to FIG. 5. FIG. 5 is a flowchart of the processing sequence of the controller 30 according to the present embodiment. The processing content illustrated in Fig. 5 is executed per predetermined period of time.

In step S1, the rotational speed command setting section 37 of the controller 30 determines whether the lock valve 28 is in the communicating position or not (stated otherwise, whether the lock device is in the unlocked state or not) from the signal from the lock switch 29. If the lock valve 28 is in the communicating position (stated otherwise, when the lock device is in the unlocked state), then the processing sequence goes to step S2. In step S2, the rotational speed command setting section 37 outputs the reference rotational speed computed by the reference rotational speed computing section 33, as a rotational speed command, to the inverter 31.

If the lock valve 28 is in the interrupting position (stated otherwise, the lock device is in the locked state), then the processing sequence goes to step S3. In step S3, the rotational speed command setting section 37 acquires the present rotational speed of the electrically driven motor 20 from the inverter 31 or acquires it as the previous rotational speed command, and determines whether the present rotational speed of the electrically driven motor 20 is a predetermined locked-state rotational speed or not. Immediately after the lock value 28 is shifted from the communicating state to the interrupting state (stated otherwise, immediately after the lock device is shifted from the unlocked state to the locked state), since the present rotational speed of the electrically driven motor 20 is not the predetermined locked-state rotational speed, the processing sequence goes to steps S4 through S6.

In step S4, the difference computing section 34 of the controller 30 computes the difference between the present rotational speed of the electrically driven motor 20 and the predetermined locked-state rotational speed (zero according to the present embodiment). Thereafter, the processing sequence goes to step S5 in which the selecting section 35 selects a smaller one of the difference computed by the difference computing section 34 and the predetermined limit value. The interpolated rotational speed computing section 36 computes an interpolated rotational speed by subtracting the difference selected by the selecting section 35 or the limit value from the present rotational speed of the electrically driven motor 20. Thereafter, the processing sequence goes to step S6 in which the rotational speed command setting section 37 outputs the interpolated rotational speed computed by the interpolated rotational speed computing section 36, as a rotational speed command, to the inverter 31.

The processing of steps S4 through S6 is repeated until the present rotational speed of the electrically driven motor 20 reaches the predetermined locked-state rotational speed. Specifically, the controller 30 outputs a rotational speed command for reducing the rotational speed of the electrically driven motor 20 step by step until it reaches the predetermined locked-state rotational speed, while restricting a reduction rate of the rotational speed command (a reduction rate of the rotational speed of the electrically driven motor 20 as well) to the predetermined limit value or less. A specific example will be described below where the controller 30 performs the processing content illustrated in FIG. 5 every second, the reference rotational speed is 1200 rpm, and the predetermined limit value is 500 rpm.

Immediately after the lock device is shifted from the unlocked state to the locked state, the difference computing section 34 computes the difference between the present rotational speed (1200 rpm) of the electrically driven motor 20 and the predetermined locked-state rotational speed (0 rpm). The selecting section 35 selects a smaller one of the difference (1200 rpm) computed by the difference computing section 34 and the predetermined limit value (500 rpm). The interpolated rotational speed computing section 36 computes an interpolated rotational speed by subtracting the limit value (500 rpm) selected by the selecting section 35 from the present rotational speed (1200 rpm) of the electrically driven motor 20. The rotational speed command setting section 37 outputs the interpolated rotational speed (700 rpm) computed by the interpolated rotational speed computing section 36, as a rotational speed command, to the inverter 31.

After elapse of one second, the difference computing section 34 computes the difference between the present rotational speed (700 rpm) of the electrically driven motor 20 and the predetermined locked-state rotational speed (0 rpm). The selecting section 35 selects a smaller one of the difference (700 rpm) computed by the difference computing section 34 and the predetermined limit value (500 rpm). The interpolated rotational speed computing section 36 computes an interpolated rotational speed by subtracting the limit value (500 rpm) selected by the selecting section 35 from the present rotational speed (700 rpm) of the electrically driven motor 20. The rotational speed command setting section 37 outputs the interpolated rotational speed (200 rpm) computed by the interpolated rotational speed computing section 36, as a rotational speed command, to the inverter 31.

After elapse of one second, the difference computing section 34 computes the difference between the present rotational speed (200 rpm) of the electrically driven motor 20 and the predetermined locked-state rotational speed (0 rpm). The selecting section 35 selects a smaller one of the difference (200 rpm) computed by the difference computing section 34 and the predetermined limit value (500 rpm). The interpolated rotational speed computing section 36 computes an interpolated rotational speed by subtracting the difference (200 rpm) selected by the selecting section 35 from the present rotational speed (200 rpm) of the electrically driven motor 20. The rotational speed command setting section 37 outputs the interpolated rotational speed (0 rpm) computed by the interpolated rotational speed computing section 36, as a rotational speed command, to the inverter 31.

If the present rotational speed of the electrically driven motor 20 reaches the predetermined locked-state rotational speed in step S3, then the processing sequence goes to step S7. In step S7, the rotational speed command setting section 37 outputs the locked-state rotational speed as a rotational speed command to the inverter 31.

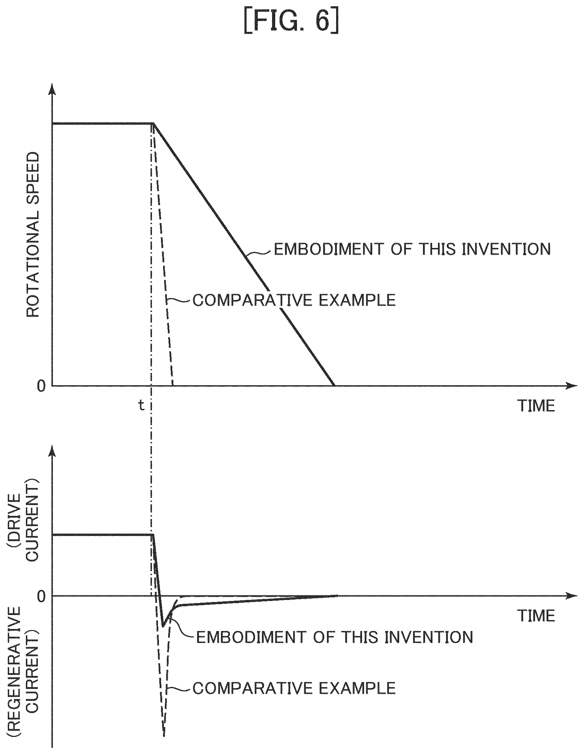

Next, effects and advantages of the present embodiment will be described below with reference to Fig. 6. Fig. 6 is a timing chart illustrating changes in the rotational speeds and currents of electrically driven motors according to the present embodiment and a comparative example. In Fig. 6, a positive current represents a drive current from the inverter 31 to the electrically driven motor 20 whereas a negative current represents a regenerative current from the electrically driven motor 20 to the inverter 31.

A controller according to a comparative example does not restrict a reduction rate of the rotational speed command (a reduction rate of the rotational speed of the electrically driven motor 20 as well) to the predetermined limit value or less. Specifically, when the lock device is shifted from the unlocked state to the locked state (time t), the controller instantly outputs a rotational speed command as zero to the inverter 31. Therefore, as depicted by the dotted-line in FIG. 6, the rotational speed of the electrically driven motor 20 decreases sharply and, as a consequence, the current regenerated by the electrically driven motor 20 greatly increases instantaneously. When the electricity storage device 32 is charged with the regenerative electric power from the electrically driven motor 20, then the charging current of the electricity storage device 32 exceeds an allowable value, accelerating deterioration of the electricity storage device 32.

In contrast, when the lock device is shifted from the unlocked state to the locked state (time t), the controller 30 according to the present embodiment outputs a rotational speed command for reducing the rotational speed of the electrically driven motor 20 to be zero step by step while restricting a reduction rate of the rotational speed command (a reduction rate of the rotational speed of the electrically driven motor 20 as well) to the predetermined limit value or less. Therefore, as depicted by the solid-line in FIG. 6, the rotational speed of the electrically driven motor 20 decreases gradually, and following this, the regenerative current from the electrically driven motor 20 increases not significantly but instantaneously. Then, if the electricity storage device 32 is charged with the regenerative electric power from the electrically driven motor 20, the charging current of the electricity storage device 32 does not exceed its allowable value, preventing the electricity storage device 32 from being deteriorated.

According to the present embodiment, therefore, the electricity storage device 32 is charged with the regenerative electric power from the electrically driven motor 20, and is prevented from being deteriorated.

According to the above embodiment, it has been described by way of example that the operation device has pilot valves for generating pilot pressures commensurate with operation amounts of the operation lever and outputting the pilot pressures to the pressure-receiving portions of the control valve, and the lock device is the lock valve 28 provided on the primary sides of the pilot valves. However, the present invention is not limited to such a case. The operation device may have a potentiometer for generating operation signals commensurate with operation amounts of the operation lever and outputting the operation signals to the solenoid portions of the control valve, and the lock device may be a relay provided on the primary side of the potentiometer.

Moreover, according to the above embodiment, it has been described by way of example that the controller 30 stops the electrically driven motor 20 (i.e., the predetermined locked-state rotational speed is zero) when the lock device is shifted from the unlocked state to the locked state. However, the present invention is not limited to such a case. The controller 30 may decelerate the electrically driven motor 20 when the lock device is shifted from the unlocked state to the locked state. In other words, the predetermined locked-state rotational speed may be of a value smaller than the reference rotational speed and larger than zero.

Furthermore, according to the above embodiment, it has been described by way of example that the controller 30 restricts the reduction rate of the rotational speed command to the predetermined limit value or less when the lock device is shifted from the unlocked state to the locked state to reduce the rotational speed command. However, the present invention is not limited to such a case. The controller 30 may restrict the reduction rate of the rotational speed command to the predetermined limit value or less when it reduces the rotational speed command in response to the operation of the drive/stop switch. Alternatively, the controller 30 may restrict the reduction rate of the rotational speed command to the predetermined limit value or less when it reduces the rotational speed command in response to the operation of the rotational speed setting device 17.

It has been described an example that the present invention is applied to an excavator. However, the present invention is not limited to such a case, but may be applied to other construction machines.

### Description of Reference Characters

9: boom cylinder
10: arm cylinder
11: bucket cylinder
20: electrically driven motor
21: hydraulic pump
28: lock valve (lock device)
30: controller
31: inverter
32: electricity storage device

## Claims

1. A construction machine comprising:
an electrically driven motor;
a controller for outputting a rotational speed command;
an inverter for controlling a rotational speed of the electrically driven motor in response to the rotational speed command from the controller; and
an electricity storage device for outputting drive electric power to the inverter upon acceleration of the electrically driven motor, and being supplied with regenerative electric power input from the inverter upon deceleration of the electrically driven motor, wherein
the controller outputs the rotational speed command to the inverter such that a reduction rate of the rotational speed of the electrically driven motor is equal to or lower than a predetermined limit value, upon deceleration of the electrically driven motor.

2. The construction machine according to claim 1, wherein
the construction machine includes
a hydraulic pump for being driven by the electrically driven motor,
hydraulic actuators for being driven by a hydraulic fluid delivered from the hydraulic pump, and
a lock device for selectively shifting into a locked state that prevents the hydraulic actuators from being driven and an unlocked state that allows the hydraulic actuators to be driven, and
the controller outputs the rotational speed command such that the rotational speed of the electrically driven motor is reduced step by step while the reduction rate of the rotational speed of the electric motor is restricted to the predetermined limit value or less, when the lock device is shifted from the unlocked state to the locked state.

3. The construction machine according to claim 2, wherein
the controller outputs the rotational speed command such that the rotational speed of the electrically driven motor is reduced step by step to be zero while the reduction rate of the rotational speed of the electrically driven motor is restricted to the predetermined limit value or less, when the lock device is shifted from the unlocked state to the locked state.
